(19) Europäisches Patentamt / European Patent Office / Office européen des brevets

(11) **EP 3 196 598 B1**

(12) **EUROPÄISCHE PATENTSCHRIFT**

(45) Veröffentlichungstag und Bekanntmachung des Hinweises auf die Patenterteilung:
**09.01.2019   Patentblatt 2019/02**

(51) Int Cl.:
**G01D 5/38** *(2006.01)*      **G01B 9/02** *(2006.01)*

(21) Anmeldenummer: **16197086.8**

(22) Anmeldetag: **03.11.2016**

(54) **OPTISCHE POSITIONSMESSEINRICHTUNG**

OPTICAL POSITIONING DEVICE

DISPOSITIF OPTIQUE DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.01.2016   DE 102016200847**

(43) Veröffentlichungstag der Anmeldung:
**26.07.2017   Patentblatt 2017/30**

(73) Patentinhaber: **Dr. Johannes Heidenhain GmbH 83301 Traunreut (DE)**

(72) Erfinder:
• **SPECKBACHER, Peter 84558 Kirchweidach (DE)**
• **GRÜNDL, Tobias 83734 Hausham (DE)**
• **BÄUML, Christian 83374 Traunwalchen (DE)**
• **WEIDMANN, Josef 84550 Feichten a.d. Alz (DE)**

(56) Entgegenhaltungen:
EP-A1- 0 660 139          EP-A2- 0 446 691
DE-A1-102014 218 623

• GLYTSIS E N ET AL: "HIGH-SPATIAL-FREQUENCY BINARY AND MULTILEVEL STAIRSTEP GRATINGS: POLARIZATION-SELECTIVE MIRRORS AND BROADBAND ANTIREFLECTION SURFACES", APPLIED OPTICS, OPTICAL SOCIETY OF AMERICA, WASHINGTON, DC; US, Bd. 31, Nr. 22, 1. August 1992 (1992-08-01), Seiten 4459-4470, XP000292091, ISSN: 0003-6935, DOI: 10.1364/AO.31.004459

**Beschreibung**

## GEBIET DER TECHNIK

Die vorliegende Erfindung betrifft eine optische Positionsmesseinrichtung mit einer Maßverkörperung und einer Abtastplatte, deren Position relativ zueinander mittels mehrerer interferierender Lichtstrahlen in drei linear voneinander unabhängigen Raumrichtungen feststellbar ist.

## STAND DER TECHNIK

Aus der DE 102014218623 A1 der Anmelderin ist eine gattungsgemäße Positionsmesseinrichtung bekannt. Der besondere Vorteil derartiger Positionsmesseinrichtungen liegt darin, dass mittels einer einzigen Positionsmesseinrichtung die Relativlage zweier Objekte in drei Raumrichtungen gemessen werden kann. Zwei dieser Raumrichtungen sind linear voneinander unabhängig (z.B. indem sie aufeinander senkrecht stehen) und liegen parallel zur flächigen Maßverkörperung und auch parallel zur flächigen Abtastplatte, die dritte Raumrichtung steht senkrecht auf den beiden ersten Raumrichtungen und entspricht dem Abstand bzw. einer Abstandsänderung zwischen der Abtastplatte und der Maßverkörperung.

In dieser aus dem Stand der Technik bekannten Positionsmesseinrichtung dient ein Aufspaltgitter auf der Abtastplatte zum Aufspalten eines einfallenden Lichtstrahls in mehrere Teilstrahlenbündel. Diese Teilstrahlenbündel wechselwirken mit einem optischen Gitter auf der Maßverkörperung, bevor sie zurück zur Abtastplatte reflektiert werden. Dort wechselwirkt das Licht mit mehreren Gitterfeldern und Spiegeln, bevor es erneut auf die Maßverkörperung und von dort zu einem Auskoppelgitter auf der Abtastplatte gelangt. Das vom Auskoppelgitter abgestrahlte Licht wird in mehreren Detektoren in periodische Signale umgewandelt, aus denen letztlich Positionsänderungen in den drei Raumrichtungen ermittelt werden können.

Die Funktionsweise dieser Positionsmesseinrichtung und die Funktion der verschiedenen Gitterfelder ist in der genannten DE 102014218623 A1 ausführlich erklärt. Die Gitterfelder wirken als diffraktive Optiken und können beispielsweise als Zylinderlinsen wirken. Hierbei ist es besonders wichtig, jeweils eine sehr definierte Beeinflussung des Lichtes (hinsichtlich der Beugungsrichtung, Beugungseffizienz, Polarisation, Phasenlage) an den einzelnen Gitterfeldern zu erzielen, um letztlich gute Signale für die Positionsmessung in allen Raumrichtungen zu erhalten. Dies wurde bisher dadurch erreicht, dass die Gitterfelder der Abtastplatte hinsichtlich der Strichrichtung der Gitter, der Gitterperiode und des Strich-Lücke-Verhältnisses optimiert wurden. Diese Parameter können auf einfache Weise z.B. beim Herstellen einer Maske für einen Fotolithografieprozess eingestellt werden. Es hat sich allerdings gezeigt, dass die notwendige Genauigkeit bei der Herstellung solcher Gitter nur mit großem Aufwand zu erreichen ist. Die an der Abtastplatte auftretenden unterschiedlichen Auftreff- und Ablenkwinkel der Lichtstrahlen führen zu sehr unterschiedlichen Bedingungen, die so nur schwer zu beherrschen sind, vor allem wenn mit einer einzigen Lichtwellenlänge gearbeitet werden soll.

Eine zur Umsetzung der Erfindung geeignete Maßverkörperung mit einem Kreuzgitter ist beispielsweise aus der DE 102013220190 A1 bekannt.

## ZUSAMMENFASSUNG DER ERFINDUNG

Es ist daher Aufgabe der Erfindung, die Abtastplatten dieser aus dem Stand der Technik bekannten Positionsmesseinrichtungen weiter zu verbessern, um das Prozessfenster bei deren Herstellung zu vergrößern.

Diese Aufgabe wird gelöst durch eine Vorrichtung gemäß Anspruch 1. Vorteilhafte Details dieser Vorrichtung ergeben sich auch aus den von Anspruch 1 abhängigen Ansprüchen.

Es wird eine optische Positionsmesseinrichtung mit einer Maßverkörperung und einer Abtastplatte, deren Position relativ zueinander mittels mehrerer interferierender Lichtstrahlen in drei linear voneinander unabhängigen Raumrichtungen feststellbar ist offenbart, wobei zwei Raumrichtungen parallel zur Ebene der Maßverkörperung und parallel zur Ebene der Abtastplatte liegen und die dritte Raumrichtung senkrecht dazu. Die Positionsmesseinrichtung weist ein auf der Abtastplatte angeordnetes Aufspaltgitter zum Aufspalten von Licht in mehrere Teilstrahlen unterschiedlicher Beugungsordnung, sowie ein optisches Gitter auf der Maßverkörperung zur weiteren Aufspaltung der Teilstrahlen und zur Wiedervereinigung dieser weiter aufgespalten Teilstrahlen nach deren Rückreflexion von der Abtastplatte auf. Ferner weist die Positionsmesseinrichtung mehrere Gitterfelder auf der der Maßverkörperung zugewandten Seite der Abtastplatte auf, die als diffraktive Optiken der Beeinflussung der an der Maßverkörperung weiter aufgespaltenen Teilstrahlen dienen, sowie ein auf der Abtastplatte angeordnetes Auskoppelgitter zum Auskoppeln von mehrfach zwischen der Maßverkörperung und der Abtastplatte reflektiertem Licht als interferierende Teilstrahlenbündel. Die Positionsmesseinrichtung zeichnet sich dadurch aus, dass eine Stufenhöhe der mehreren, als Phasengitter ausgebildeten Gitterfelder variabel ist.

Indem für die von Licht aus unterschiedlichsten Richtungen beaufschlagten Gitterfelder unterschiedliche Stufenhöhen vorgesehen sind, ergibt sich ein zusätzlicher Freiheitsgrad bei der Auslegung der Gitterfelder, und damit bei der Einstellung der Beugungseffizienzen der einzelnen Gitter. Auch wenn der Herstellungsprozess durch solche unterschiedlichen Stufenhöhen etwas komplexer wird, weil beispielsweise unterschiedliche Ätztiefen für unterschiedliche Gitterfelder gefordert sind, ergibt sich insgesamt dennoch ein größeres Prozessfenster und damit eine größere Ausbeute bei der Herstellung der Abtastplatten. Trotz des höheren Aufwandes beim Ätzen der Gitter ergibt sich so eine kostengünstigere Fertigung dieser sehr anspruchsvollen optischen Komponente der Positionsmesseinrichtung. Der Betrieb einer solchen Positionsmesseinrichtung kann mit einer einzigen Lichtwellenlänge und damit mit einer einzigen Lichtquelle erfolgen.

Weitere Vorteile und Einzelheiten der vorliegenden Erfindung ergeben sich aus der nachfolgenden Beschreibung verschiedener Ausführungsformen anhand der Figuren.

## KURZE BESCHREIBUNG DER ZEICHNUNGEN

Dabei zeigt

Figur 1      eine schematische Darstellung einer Abtastplatte und einer Maßverkörperung einer Positionsmesseinrichtung in einer Seitenansicht,

Figur 2      eine Draufsicht auf die der Maßverkörperung zugewandten Seite der Abtastplatte der Figur 1,

Figur 3      eine Abtastplatte mit Gitterfeldern variabler Stufenhöhe gemäß einem ersten Ausführungsbeispiel,

Figur 4      eine Abtastplatte mit Gitterfeldern variabler Stufenhöhe gemäß einem zweiten Ausführungsbeispiel,

Figur 5      eine Abtastplatte mit Gitterfeldern variabler Stufenhöhe gemäß einem dritten Ausführungsbeispiel.

## BESCHREIBUNG DER AUSFÜHRUNGSFORMEN

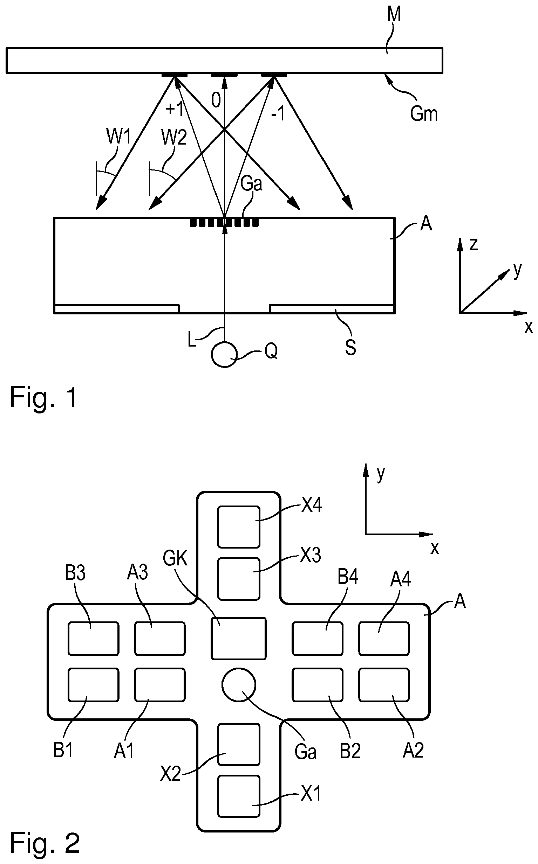

Die Figur 1 zeigt schematisch den prinzipiellen Aufbau einer gattungsgemäßen Positionsmesseinrichtung mit einer flächigen, in zwei Raumrichtungen X und Y erstreckten Abtastplatte A und einer flächigen, zur Abtastplatte A parallelen Maßverkörperung M. Die Figur 2 zeigt die der Maßverkörperung M zugewandte Seite der Abtastplatte A in einer Draufsicht.

Licht L einer Lichtquelle Q fällt in Z-Richtung durch die transparente Abtastplatte A und trifft auf ein Aufspaltgitter Ga, das auf der der Maßverkörperung M zugewandten Seite der Abtastplatte A angeordnet ist. Dieses Aufspaltgitter Ga spaltet das Licht L in mehrere Teilstrahlen +1, 0, -1 unterschiedlicher Beugungsordnung auf. Diese drei Teilstrahlen +1, 0, -1 treffen auf ein optisches Gitter Gm, das auf der der Abtastplatte A zugewandten Seite der Maßverkörperung M angeordnet ist. Bei diesem optischen Gitter Gm handelt es sich um ein Kreuzgitter, das die Teilstrahlen +1, 0, -1 erneut in unterschiedliche Beugungsordnungen aufspaltet, nämlich bevorzugt jeweils in je eine +/-1. Beugungsordnung, während die 0. Beugungsordnung unterdrückt wird. Insgesamt resultieren daher sechs (3 mal 2) Lichtstrahlen, die zurück zur Abtastplatte A laufen. Während die Teilstrahlen +1, 0, -1 nach dem Aufspaltgitter Ga nur in der X-Z-Ebene aufgefächert sind, existieren nach dem optischen Gitter Gm der Maßverkörperung M auch Lichtstrahlen mit einer Komponente in die Y-Richtung, da das Kreuzgitter Gm der Maßverkörperung M sowohl in X- als auch in Y-Richtung beugt.

Die insgesamt sechs Lichtstrahlen laufen dann von der Maßverkörperung M zurück zur Abtastplatte A, und treffen dort auf sechs verschiedene Gitterfelder B1, B2, A1, A2, X1, X3. Die dabei auftretenden unterschiedlichen Einfallswinkel w1, w2 sind in der Figur 1 gut zu erkennen. Diese Gitterfelder wirken als diffraktive Optiken, die das Licht lenken und fokussieren, so dass es auf Spiegel S trifft, die auf der der Maßverkörperung M abgewandten Seite der Abtastplatte A aufgebracht sind. Solche Spiegel können z.B. durch eine aufgedampfte Schicht aus Chrom, Aluminium, Silber oder Gold realisiert werden.

Von diesen Spiegeln S fällt das Licht zurück auf weitere sechs Gitterfelder B3, B4, A3, A4, X2, X4, die das Licht erneut lenken und fokussieren, so dass es nun zurück zur Maßverkörperung M läuft. Dort wird es an dem optischen Gitter Gm zu einem Lichtstrahl vereinigt, der zurück zur Abtastplatte A läuft und dort auf ein Auskoppelgitter Gk trifft, von dem aus interferierende Teilstrahlenbündel zu Fotodetektoren laufen. Die Fotodetektoren geben bei einer Positionsänderung periodische Signale ab, aus denen die Positionsänderungen in allen drei Raumrichtungen X, Y und Z abgeleitet werden können.

Bezüglich der Funktionsweise dieser Positionsmesseinrichtung sei noch einmal ausdrücklich auf die eingangs erwähnte DE 102014218623 A1 verwiesen, die die hier schematisch dargestellte Positionsmesseinrichtung ausführlich erklärt.

Betrachtet man die Geometrie der Abtastplatte A, und insbesondere die räumliche Anordnung der Gitterfelder A1, A2, A3, A4, B1, B2, B3, B4, X1, X2, X3, X4 auf der Abtastplatte A, sowie den Weg, den die insgesamt sechs Lichtstrahlen von der Maßverkörperung M zur Abtastplatte A und wieder zurück nehmen, wird klar, dass auf der Abtastplatte A Licht unter verschiedensten Winkeln w1, w2, Phasenlagen und Polarisationen (s, p, zirkular, elliptisch) auftreffen kann. Um die Beeinflussung des Lichtes auf optimale Weise einstellen zu können, wird daher vorgeschlagen, die Gitterfelder A1, A2, A3, A4, B1, B2, B3, B4, X1, X2, X3, X4 der Abtastplatte A auch hinsichtlich ihrer Ätztiefe zu optimieren.

Hierzu muss man sich klar machen, dass der übliche Weg zur Herstellung solcher Gitterfelder darin besteht, eine Ätzmaske mit Gitterstrukturen zu erzeugen, die mittels eines Ätzprozesses in die Abtastplatte A übertragen wird. Die Ätzmaske kann dabei die Richtung der Gitterstriche, die Gitterperiode und das Abtastverhältnis (also die Breite der Gitterstriche im Verhältnis zur Gitterperiode) festlegen, nicht aber die Ätztiefe. Diese wird durch einen Ätzprozess bestimmt, der für alle Gitter gleich ist. Um Gitterfelder A1, A2, A3, A4, B1, B2, B3, B4, X1, X2, X3, X4 mit variabler Stufenhöhe zu erzeugen, sind also mehrere verschiedene Ätzprozesse erforderlich, die jeweils auf eine andere Ätzmaske wirken. Dies erhöht den Aufwand zur Herstellung der Abtastplatte A wegen der dann zusätzlich erforderlichen Lithographie-Schritte, bringt aber Vorteile hinsichtlich der Optimierung der Messsignale und auch der Ausbeute beim Herstellungsprozess der Abtastplatte A.

Es sei an dieser Stelle erwähnt, dass die Wirkung der hier besprochenen Gitter auf einem Phasenunterschied beruht, der entsteht, wenn Licht einen längeren Weg (Steg des Gitters) bzw. einen kürzeren Weg (Lücke des Gitters) durch ein optisch dichtes Medium zurücklegt. Wie in den Ausführungsbeispielen unten noch gezeigt wird, ist der Begriff Stufenhöhe eines solchen Phasengitters nicht beschränkt auf die reine Abmessung einer Ätzstufe, vielmehr muss auch der Brechungsindex der jeweiligen Schichten berücksichtigt werden.

Im Folgenden wird anhand von drei Ausführungsbeispielen erklärt, wie die variablen Stufenhöhen der Gitterfelder A1, A2, A3, A4, B1, B2, B3, B4, X1, X2, X3, X4 ausgebildet sein können.

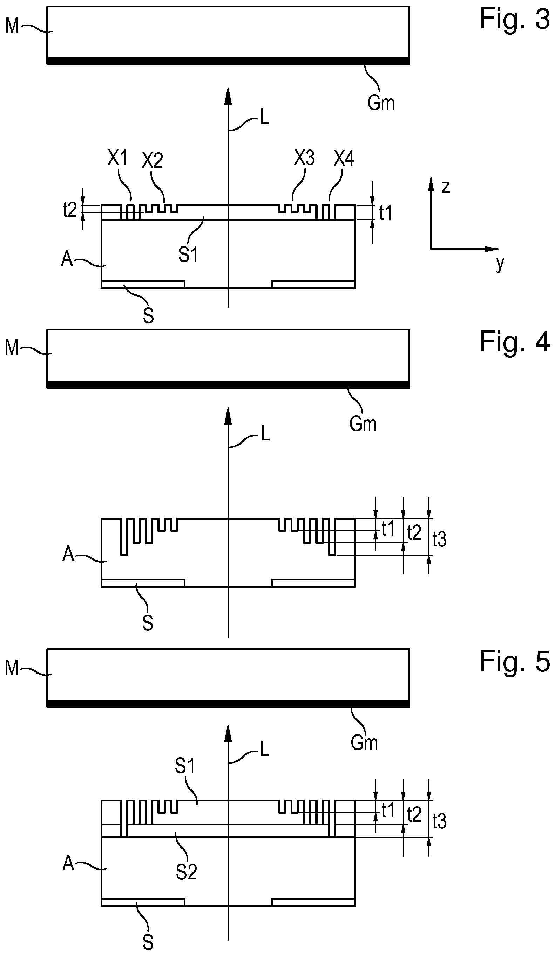

In der Figur 3 ist eine Abtastplatte A im Schnitt dargestellt, mit den Gitterfeldern X1, X2, X3, X4, sowie eine Maßverkörperung M mit dem optischen Gitter Gm. Die Abtastplatte A besteht aus einer Glaskeramik mit einem thermischen Ausdehnungskoeffizient nahe Null (erhältlich z.B. unter dem Handelsnamen Zerodur, alternativ könnte zum Beispiel auch ein Quarzblock verwendet werden), sowie einer darauf abgeschiedenen Schicht S1 aus Siliziumdioxid (SiO$_2$). Tantalpentoxid und Silizium sind Beispiele für alternative Materialien, die für die Schicht S1 auch verwendet werden könnten. In diese Schicht S1 sind nun Gitterfelder X1, X2, X3, X4 mit variabler Stufenhöhe t1, t2 geätzt. Die Stufenhöhe t1 wird für die Gitter X1 und X4 verwendet, die Stufenhöhe t2 wird für die Gitterfelder X2 und X3 verwendet.

Die Stufenhöhen t1, t2 (bzw. die jeweils gleiche Stufenhöhe aufweisende Gitterfelder) sind also symmetrisch zum Zentrum der Abtastplatte A angeordnet. Dieses Zentrum liegt in etwa mittig zwischen dem Aufspaltgitter Ga und dem Auskoppelgitter Gk. In den Figuren 3 - 5 ist dieses Zentrum durch das einfallende Licht L markiert. Diese Symmetrie bewirkt eine reduzierte Empfindlichkeit der Positionsmesseinrichtung gegenüber leichten Verkippungen der Abtastplatte A relativ zur Maßverkörperung M. Typische Werte für die Stufenhöhe könnten z.B. t1 = 1600 nm und t2 = 950 nm für eine Abtastung mit Licht der Wellenlänge 976nm sein. Für andere Wellenlängen würden sich andere optimale Stufenhöhen t1, t2 ergeben.

In der Figur 4 ist eine Abtastplatte A gezeigt, bei dem die Gitterfelder unmittelbar in ein Quarzglas - Substrat (erhältlich z.B. unter den Handelsnamen Herasil oder Suprasil) geätzt sind. Zur Veranschaulichung der Möglichkeiten sind hier drei verschiedene Stufenhöhen t1, t2 und t3 realisiert, denn die Erfindung ist nicht auf lediglich zwei verschiedene Stufenhöhen beschränkt. Zur Verringerung der Kippempfindlichkeit sind die verschiedenen Stufenhöhen t1, t2, t3 wieder symmetrisch zum Zentrum der Abtastplatte A angeordnet.

Als weiteres Ausführungsbeispiel zeigt die Figur 5 eine Abtastplatte A, bei der zwischen einem Zerodur-Substrat und einer Siliziumdioxidschicht S1 noch eine zusätzliche Siliziumschicht S2 angeordnet ist. Dies kann sinnvoll sein, wenn besonders große Phasenunterschiede erzeugt werden müssen, entsprechend besonders großen Stufenhöhen. Betrachtet man die Stufen der Stufenhöhe t3, so erkennt man, dass diese Stufen teilweise bis in die Schicht S2 reichen. Diese Siliziumschicht S2 weist einen deutlich höheren Brechungsindex auf als die SiO$_2$ - Schicht S1. Damit ist optisch eine deutlich größere Stufenhöhe wirksam, denn die phasenschiebende Wirkung jeder Stufe hängt vom mittleren Brechungsindex der durchgeätzten Schicht ab. Der ätztechnische Aufwand reduziert sich dank der zusätzlichen Schicht S2, denn verglichen mit einer reinen SiO$_2$ - Schicht S1 genügt eine geringere Ätztiefe, um einen vorgegebene Phasenschiebung am Gitter zu erhalten.

Anders ausgedrückt: Das optische Feld, welches die Abtastplatte A durchschreitet, sieht immer nur die sogenannte optische Schichtdicke

$$d_{opt} = n \cdot d,$$

wobei d der physikalischen Schichtdicke entspricht (die beispielsweise taktil ermittelt werden kann), und n dem (mittleren) Brechungsindex der geätzten Schichten. Der Begriff Stufenhöhe liefert damit vor allem ein Maß für den Betrag des Phasenhubes.

Grundsätzlich sind also auch Abtastplatten A denkbar, die eine Abfolge von mehreren verschieden Schichten S1, S2 auf einem transparenten Substrat aufweisen, wobei in diese Abfolge Gitterfelder mit variablen (unterschiedlichen) Stufenhöhen geätzt werden.

Während eine bevorzugte Ausführungsform der Positionsmesseinrichtung eine monochromatische Lichtquelle Q verwendet (beispielsweise eine Laserdiode), die Licht einer einzigen Wellenlänge abgibt - dies zu ermöglichen war ja einer der Ausgangspunkte der vorliegenden Erfindung - ist die Erfindung nicht darauf beschränkt. Auch wenn mehrere Wellenlängen zum Einsatz kommen sollen, um die verschiedenen Positionsmessungen in den Raumrichtungen X, Y, Z zu ermöglichen, kann eine Abtastplatte A auch darauf besser angepasst werden als herkömmliche Abtastplatten A mit Gitterfeldern A1, A2, A3, A4, B1, B2, B3, B4, X1, X2, X3, X4 nur einer einzigen Stufenhöhe.

## Patentansprüche

1. Optische Positionsmesseinrichtung mit einer Maßverkörperung (M) und einer Abtastplatte (A), deren Position relativ zueinander mittels mehrerer interferierender Lichtstrahlen in drei linear voneinander unabhängigen Raumrichtungen (X, Y, Z) feststellbar ist, wobei zwei Raumrichtungen (X, Y) parallel zur Ebene der Maßverkörperung (M) und parallel zur Ebene der Abtastplatte (A) liegen und die dritte Raumrichtung (Z) mit einer Komponente senkrecht dazu,

   - mit einem auf der Abtastplatte (A) angeordneten Aufspaltgitter (Ga) zum Aufspalten von Licht (L) in mehrere Teilstrahlen (+1, 0, -1) unterschiedlicher Beugungsordnung,
   - mit einem auf der Maßverkörperung (M) angeordneten optischen Gitter (Gm) zur weiteren Aufspaltung der Teilstrahlen (+1, 0, -1) und zur Wiedervereinigung dieser weiter aufgespaltenen Teilstrahlen (+1, 0, -1) nach deren Rückreflexion von der Abtastplatte (A),
   - mit mehreren Gitterfeldern (A1 - A4, B1 - B4, X1 - X4) auf der der Maßverkörperung (M) zugewandten Seite der Abtastplatte (A), die als diffraktive Optiken der Beeinflussung der an der Maßverkörperung (M) weiter aufgespaltenen Teilstrahlen (+1, 0, -1) dienen,
   - mit einem auf der Abtastplatte (A) angeordneten Auskoppelgitter (Gk) zum Auskoppeln von mehrfach zwischen der Maßverkörperung (M) und der Abtastplatte (A) reflektiertem Licht als interferierende Teilstrahlenbündel,

   **dadurch gekennzeichnet, dass**

   - eine Stufenhöhe (t1, t2, t3) der mehreren, als Phasengitter ausgebildeten Gitterfelder (A1 - A4, B1 - B4, X1 - X4) unterschiedlich ist.

2. Vorrichtung nach Anspruch 1, **dadurch gekennzeichnet, dass** Gitterfelder (A1 - A4, B1 - B4, X1 - X4) mit gleicher Stufenhöhe (t1, t2, t3) paarweise symmetrisch zu einem Zentrum der Abtastplatte (A) angeordnet sind.

3. Vorrichtung nach Anspruch 2, **dadurch gekennzeichnet, dass** das Zentrum der Abtastplatte (A) zwischen dem Aufspaltgitter (Ga) und dem Auskoppelgitter (Gk) liegt.

4. Vorrichtung nach einem der vorhergehenden Ansprüche, **dadurch gekennzeichnet, dass** die Abtastplatte (A) eine Glaskeramik mit einem thermischen Ausdehnungskoeffizient nahe Null umfasst, auf der eine Schicht (S1) angeordnet ist, in die die Gitterfelder (A1 - A4, B1 - B4, X1 - X4) mittels Ätzen eingebracht sind.

5. Vorrichtung nach Anspruch 4, **dadurch gekennzeichnet, dass** die Schicht (S1) eine Siliziumdioxidschicht ist.

6. Vorrichtung nach einem der vorhergehenden Ansprüche, **dadurch gekennzeichnet, dass** die Positionsmesseinrichtung eine monochromatische Lichtquelle (Q) umfasst.

## Claims

1. Optical position measuring device having a material measure (M) and a scanning plate (A), the position of which relative to one another is determinable in three linearly independent spatial directions (X, Y, Z) by means of a plurality of interfering light beams, wherein two spatial directions (X, Y) lie parallel to the plane of the material measure (M) and parallel to the plane of the scanning plate (A) and the third spatial direction (Z) is perpendicular thereto with one component,

   - having a splitter grating (Ga), arranged on the scanning plate (A), for splitting light (L) into a plurality of partial beams (+1, 0, -1) of different orders of diffraction,
   - having an optical grating (Gm), arranged on the material measure (M), for further splitting of the partial beams (+1, 0, -1) and for reunifying these further split partial beams (+1, 0, -1) after their back reflection from the scanning plate (A),
   - having a plurality of grating fields (A1-A4, B1-B4, X1-X4) on the side of the scanning plate (A) facing the material measure (M), said grating fields serving as diffractive optical units for influencing the partial beams (+1, 0, -1) that are split further at the material measure (M),
   - having an output coupling grating (Gk), arranged on the scanning plate (A), for output coupling of light, reflected multiple times between the material measure (M) and the scanning plate (A), as interfering partial beams,

   **characterized in that**

   - there is a difference in a step height (t1, t2, t3) of the plurality of grating fields (A1-A4, B1-B4, X1-X4) embodied as phase gratings.

2. Apparatus according to Claim 1, **characterized in that** grating fields (A1-A4, B1-B4, X1-X4) with the same step height (t1, t2, t3) are arranged in pairs, symmetrically with respect to a centre of the scanning plate (A).

**3.** Apparatus according to Claim 2, **characterized in that** the centre of the scanning plate (A) lies between the splitter grating (Ga) and the output coupling grating (Gk).

**4.** Apparatus according to any one of the preceding claims, **characterized in that** the scanning plate (A) comprises a glass ceramic with a coefficient of thermal expansion close to zero, a layer (S1) being arranged thereon, the grating fields (A1-A4, B1-B4, X1-X4) being introduced into said layer by means of etching.

**5.** Apparatus according to Claim 4, **characterized in that** the layer (S1) is a silicon dioxide layer.

**6.** Apparatus according to any one of the preceding claims, **characterized in that** the position measuring device comprises a monochromatic light source (Q).

**Revendications**

**1.** Dispositif optique de mesure de position, pourvu d'un étalon (M) et d'une plaque de balayage (A), dont la position l'un par rapport à l'autre peut être fixée au moyen de plusieurs faisceaux lumineux interférents dans trois directions spatiales (X, Y, Z) linéairement indépendantes les unes des autres, deux directions spatiales (X, Y) se situant à la parallèle du plan de l'étalon (M) et à la parallèle du plan de la plaque de balayage (A) et la troisième direction spatiale (Z), par une composante à la perpendiculaire de ceux-ci,

   - pourvu d'une grille de dédoublement (Ga) placée sur la plaque de balayage (A), pour la dissociation de lumière (L) en plusieurs faisceaux partiels (+1, 0, -1) de différents ordres de diffraction,
   - pourvu d'une grille optique (Gm) placée sur l'étalon (M) pour la dissociation ultérieure des faisceaux partiels (+1, 0, -1) et pour la réassociation desdits faisceaux partiels (+1, 0, -1) dissociés ultérieurement, après leur rétro-réflexion par la plaque de balayage (A),
   - pourvu de plusieurs zones de grilles (A1 - A4, B1 - B4, X1 - X4) sur le côté de la plaque de balayage (A) qui fait face à l'étalon (M), qui en tant qu'optiques diffractifs servent à influencer les faisceaux partiels (+1, 0, -1) dissociés ultérieurement sur l'étalon (M),
   - pourvu d'une grille de découplage (Gk) placée sur la plaque de balayage (A), pour découpler de la lumière réfléchie de manière multiple entre l'étalon (M) et la plaque de balayage (A), en tant que faisceau partiel interférent,

caractérisé en ce qu'une hauteur d'échelon (t1, t2, t3) des plusieurs zones de grilles (A1 - A4, B1 - B4, X1 - X4) conçues comme des grilles de phase est différente.

**2.** Dispositif selon la revendication 1, **caractérisé en ce que** des zones de grilles (A1 - A4, B1 - B4, X1 - X4) à hauteur d'échelon (t1, t2, t3) identique sont placées par paires symétriquement à un centre de la plaque de balayage (A),

**3.** Dispositif selon la revendication 2, **caractérisé en ce que** le centre de la plaque de balayage (A) se situe entre la grille de dédoublement (Ga) et la grille de découplage (Gk).

**4.** Dispositif selon l'une quelconque des revendications précédentes, **caractérisé en ce que** la plaque de balayage (A) comprend une vitrocéramique faisant preuve d'un coefficient de dilatation thermique proche de zéro, sur laquelle est placée une couche (S1) dans laquelle les zones de grilles (A1 - A4, B1 - B4, X1 - X4) sont incorporées par gravure.

**5.** Dispositif selon la revendication 4, **caractérisé en ce que** la couche (S1) est une couche de dioxyde de silicium.

**6.** Dispositif selon l'une quelconque des revendications précédentes, **caractérisé en ce que** le dispositif de mesure de position comprend une source lumineuse (Q) monochromatique.

M

Gm

+1
0
-1

W1
W2

Ga

A

z
y
x

L
Q
S

Fig. 1

y
x

X4
X3

GK

B3    A3          B4    A4

A

B1    A1          Ga    B2    A2

X2

X1

Fig. 2

Fig. 3

M

Gm

L

X1 X2                    X3 X4

t2                        t1

z

S1

A

y

S

Fig. 4

M

Gm

L

t1 t2 t3

A

S

Fig. 5

M

Gm

L

S1

t1 t2 t3

A

S2

S

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014218623 A1
- DE 102013220190 A1